Europäisches Patentamt

European Patent Office

Office européen des brevets

(11) Veröffentlichungsnummer: **0 351 395**
**A1**

## EUROPÄISCHE PATENTANMELDUNG

(21) Anmeldenummer: **89890167.3**

(22) Anmeldetag: **15.06.89**

(51) Int. Cl.⁵: **F 16 J 15/54**

(30) Priorität: **21.06.88 AT 1602/88**

(43) Veröffentlichungstag der Anmeldung:
**17.01.90 Patentblatt 90/03**

(84) Benannte Vertragsstaaten:
**DE ES FR GB IT NL SE**

(71) Anmelder: **STEYR-DAIMLER-PUCH
AKTIENGESELLSCHAFT
Franz-Josefs-Kai 51
A-1010 Wien (AT)**

(72) Erfinder: **Reif, Johann Peter, Dipl.-Ing.Dr.
Sternallee 143
A-5360 St.Wolfgang (AT)**

(54) Abdichtung eines verschmutzungs- und/oder korrosionsgefährdeten Wellendurchtritts durch ein Schmiermittel enthaltendes Gehäuse.

(57) Der verschmutzungs- und/oder korrosionsgefährdete Wellendurchtritt eines Schmiermittel enthaltendes Gehäuse (1) ist zwischen der Welle (3) und der Gehäusedurchtrittsöffnung (4) mit einer Wellendichtung (5) versehen. Um die Wellendichtung (5) vor jeglicher Beschädigung zu bewahren, ist außen im Bereich der Gehäusedurchtrittsöffnung (4) ein die Welle (3) ringförmig umschließender Auffangraum (8) angeordnet. Der Auffangraum (8) schließt an die Gehäusewand dicht an und seine vom Gehäuse (1) abgekehrte Begrenzungswand (7) wird von einem mit der Welle (3) drehenden und dicht verbundenen Ringteil (9) mit geringem Radialspiel übergriffen.

FIG.1

EP 0 351 395 A1

## Beschreibung

Die Erfindung betrifft eine Abdichtung eines verschmutzungs und/oder korrosionsgefährdeten Wellendurchtritts durch ein Schmiermittel enthaltendes Gehäuse, bei der zwischen der Welle und der Gehäusedurchtrittsöffnung wenigstens ein Wellendichtring eingesetzt ist.

Solche der Verschmutzungs- oder Korrosionsgefahr ausgesetzte Wellendurchtritte sind vor allem im Fahrzeugbau vorhanden, wo beispielsweise die Antriebswellen gelenkter getriebener Achsen aus das Gehäuse bildenden Achsstummeln herausgeführt werden müssen oder die An- und Abtriebswellen von sonstigen Getrieben ohne weiteren Schutz durch ihre Gehäuse durchtreten müssen. Es hat sich gezeigt, daß Straßenschmutz und Nässe unweigerlich zu den Gehäusedurchtrittsöffnungen gelangen und dort die Dichtungen beschädigen. Man hat sich dagegen dadurch zu helfen versucht, daß man zwei oder mehr gegebenenfalls mit mehreren Dichtlippen versehene Wellendichtringe hintereinander eingesetzt hat, doch wurde dadurch nur eine Verzögerung der schädlichen Wirkung erzielt, und es mußten immer wieder beträchtliche Korrosionsschäden an den Wellen selbst beobachtet werden, die eine weitere Beschädigung der Dichtungen mit sich bringen.

Daher hat sich die Erfindung die Aufgabe gestellt, diese Mängel zu beseitigen und die eingangs geschilderte Abdichtung so zu verbessern, daß die Dichtringe mit verhältnismäßig einfachen Mitteln verläßlich gegen den Zutritt von Schmutz und Nässe geschützt sind.

Die Erfindung löst die gestellte Aufgabe dadurch, daß außen im Bereich der Gehäusedurchtrittsöffnung ein die Welle ringförmig umschließender, an die Gehäusewand dicht anschließender Auffangraum angeordnet ist, dessen vom Gehäuse abgekehrte Begrenzungswand ein mit der Welle drehfest und dicht verbundener Ringteil mit geringem Radialspiel übergreift.

Die von außen zur Durchtrittsöffnung gelangenden Schmutz- oder Flüssigkeitsteilchen werden im Auffangraum aufgehalten und von diesem nach unten abgeleitet, ohne in das Gehäuse eintreten zu können, da ja der Auffangraum dicht an die Gehäusewand anschließt. Schmutz- bzw. Flüssigkeitsteilchen, die die vom Gehäuse abgekehrte Begrenzungswand des Auffangraumes überschreiten, treffen dort auf den mit der Welle rotierenden Ringteil und werden von diesem zum Großteil abgeschleudert. Durch das geringe Radialspiel zwischen dem Ringteil und dem Rand der Begrenzungswand ergibt sich ein Dichtungsspalt, wobei die im Ringteil angesammelte Luft einen Polster bildet, der durch seinen Druck das Eindringen von Schmutz und Feuchtigkeit weiter erschwert.

Handelt es sich um eine Konstruktion mit relativer Achsverschiebung der Welle und Gehäuse, wie dies beispielsweise bei den Radantriebswellen im Achsstummel einer gelenkten Achse auftritt, so weist der Ringteil eine größere Breite als das Maß der maximalen Relativverschiebung auf, so daß der Übergriff des Ringteils über den Rand der Begrenzungswand bzw. des Auffangraumes in jeder axialen Relativstellung gewährleistet ist.

Eine Art Labyrinthdichtung zur Vermeidung des Eintritts von Schmutz und Feuchtigkeit durch den Ringspalt zwischen dem Rand der Begrenzungswand des Auffangraumes und dem Ringteil kann erreicht werden, wenn in dem vom Ringteil übergriffenen Rand der Begrenzungswand des Auffangraumes wenigstens eine Umfangsrille vorgesehen ist.

Schließlich wird voller Schutz für die Wellendichtringe erreicht, wenn zwischen den Stirnflächen des den Auffangsraum bildenden Bauteils einersits und des den Ringteil bildenden Bauteiles bzw. der Wellendichtung anderseits zumindest im Wellenbereich eine Fettfüllung vorgesehen ist.

In der Zeichnung ist der Erfindungsgegenstand beispielsweise dargestellt, und zwar zeigen

Fig. 1 die erfindungswesentlichen Teile eines Wellendurchtrittes durch ein Gehäuse, wobei die Welle relative Axialbewegungen gegenüber dem Gehäuse durchführt, im Axialschnitt,

Fig. 2 eine Ausführungsvariante eines Details von Fig. 1 in gleicher Darstellungsweise und

Fig. 3 eine andere Konstruktion eines Wellendurchtrittes, ebenfalls im Axialschnitt.

Mit 1 ist das Schmiermittel enthaltende Gehäuse bezeichnet, das ein Lager 2 für die durchtretende Welle 3 trägt. In der Durchtrittsöffnung 4 ist eine Wellendichtung 5 eingesetzt. Von einer ringförmigen Aussparung 6 an der äußeren Stirnfläche des Gehäuses 1 und einem in der Gehäuseöffnung 4 eingepreßten und eingeklebten Konstruktionsteil 7 wird ein an der Gehäusewand dicht anschließender Auffangraum 8 für Schmutz und Nässe gebildet. Mit der Welle 1 ist ein Ringteil 9 dicht und drehfest verbunden, der die vom Gehäuse 1 abgekehrte, vom Teil 7 gebildete Begrenzungswand des Auffangraumes 8 mit geringem Radialspiel übergreift. Der Raum 10 zwischen dem Teil 8 und der Wellendichtung 5 ist mit einer Fettfüllung versehen. Bei der Ausführungsvariante nach Fig. 2 ist in dem vom Ringteil 9 übergriffenen Rand der vom Teil 7 gebildeten Begrenzungswand des Auffangraumes 8 eine Umfangsrille 11 vorgesehen, um eine Art Labyrinthdichtung zu bilden. Da die Welle 3 gegenüber dem Gehäuse 1 eine relative Axialverschiebung ausführt, weist der Ringteil 9 eine größere Breite als das Maß der maximalen Relativverschiebung auf.

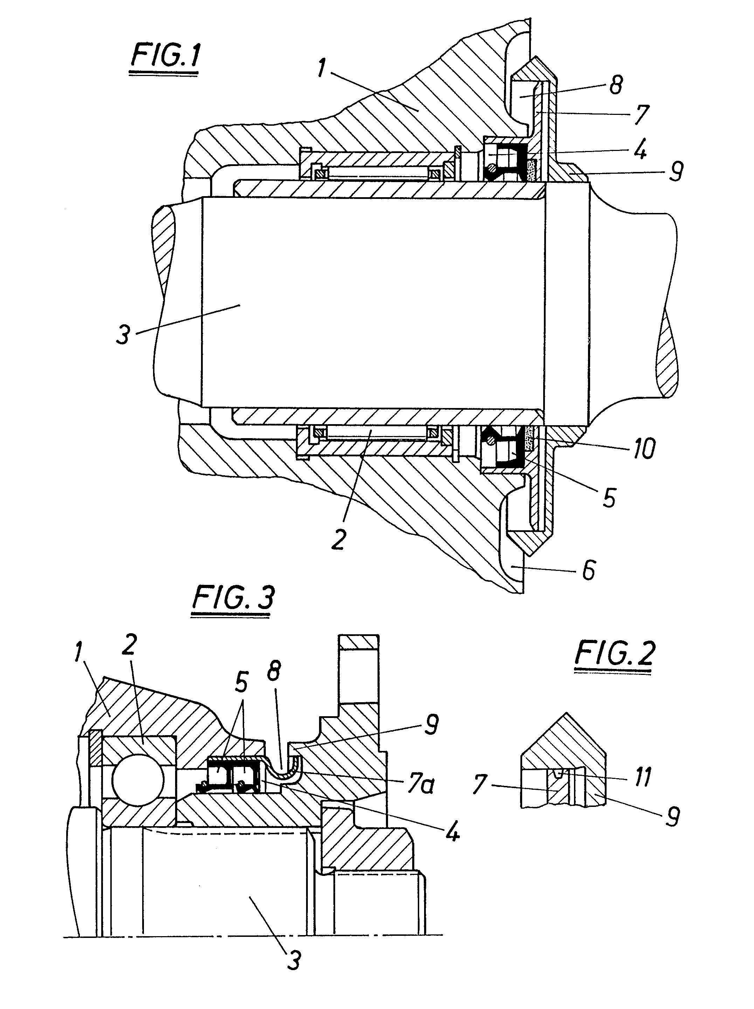

Gemäß Fig. 3 sind in der Durchtrittsöffnung 4 des Gehäuses 1 zwei Wellendichtungen 5 hintereinander eingesetzt. Der Auffangrum 8 wird von einer Blechrinne 7a gebildet, die wieder in der Durchtrittsöffnung 4 eingeklebt oder in sonstiger Weise dicht eingesetzt ist. Die vom Gehäuse 1 abgekehrte Begrenzungswand des Auffangraumes 8 wird von einem mit der Welle 3 drehenden, mit ihr dicht verbundenen Ringteil 9 übergriffen, der zugleich als Flansch für den Anschluß einer weiteren Welle dient.

**Patentansprüche**

1. Abdichtung eines verschmutzungs- und/ oder korrosionsgefährdeten Wellendurchtritts durch ein Schmiermittel enthaltendes Gehäuse (1), bei der zwischen der Welle (3) und der Gehäusedurchtrittsöffnung (4) wenigstens ein Wellendichtring (5) eingesetzt ist, **dadurch gekennzeichnet**, daß außen im Bereich der Gehäusedurchtrittsöffnung (4) ein die Welle (3) ringförmig umschließender, an die Gehäusewand dicht anschließender Auffangraum (8) angeordnet ist, dessen vom Gehäuse (1) abgekehrte Begrenzungswand (7, 7a) ein mit der Welle (3) drehfest und dicht verbundener Ringteil (9) mit geringem Radialspiel übergreift.

2. Abdichtung nach Anspruch 1, **dadurch gekennzeichnet**, daß bei relativer Axialverschiebung von Welle (3) und Gehäuse (1) der Ringteil (9) eine größere Breite als das Maß der maximalen Relativverschiebung aufweist.

3. Abdichtung nach Anspruch 1 oder 2, **dadurch gekennzeichnet**, daß in dem vom Ringteil (9) übergriffenen Rand der Begrenzungswand (7) des Auffangraumes (8) wenigstens eine Umfangsrille (11) vorgesehen ist.

4 Abdichtung nach einem der Ansprüche 1 bis 3, **dadurch gekennzeichnet**, daß zwischen den Stirnflächen des den Auffangraum (8) bildenden Bauteiles (7, 7a) einerseits und den Ringteil (9) bildenden Bauteiles bzw. der Wellendichtung (5) anderseits zumindest im Wellenbereich eine Fettfüllung (10) vorgesehen ist.

FIG.1

FIG.3

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 809 275 (WILLYS-OVERLAND) <br> * Page 3, Zeilen 53-120; Figuren 3-6 * <br> --- | 1,3 | F 16 J 15/54 |
| X | FR-A-2 211 096 (POHLIG-HECKEL-BLEICHERT) <br> * Seite 6, Zeile 38 - Seite 7, Zeile 36; Figur 1 * <br> --- | 1,4 | |
| X | FR-A-2 484 591 (RENAULT) <br> * Insgesamt * <br> ----- | 1 | |
| | | | **RECHERCHIERTE SACHGEBIETE (Int. Cl.4)** <br><br> F 16 J |

Der vorliegende Recherchenbericht wurde für alle Patentansprüche erstellt

| Recherchenort | Abschlußdatum der Recherche | Prüfer |
|---|---|---|
| DEN HAAG | 10-10-1989 | LEGER M.G.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.....................................................................................
& : Mitglied der gleichen Patentfamilie, übereinstimmendes Dokument

EPO FORM 1503 03.82 (P0403)